# FASCICULE DE BREVET EUROPEEN

(11) **EP 2 573 490 B1**
(45) Date de publication et mention de la délivrance du brevet: **16.01.2019**
(21) Numéro de dépôt: 12184722.2
(22) Date de dépôt: 17.09.2012
(51) Int. Cl.: F25D 3/10, F25D 25/00, A01N 1/02

(54) **Procédé de congélation d'une pluralité de tubes de conditionnement remplis chacun d'un volume prédéterminé de substance biologique et systeme pour la mise en oeuvre d'un tel procédé**
Verfahren zum Einfrieren einer Vielzahl von Verpackungsrohren, die jeweils mit einer bestimmten Menge an biologischer Substanz gefüllt sind, und System zur Umsetzung eines solchen Verfahrens
Method for freezing a plurality of packaging tubes, each of which is filled with a predetermined volume of a biological substance and system for implementing such a method

(30) Priorité: 20.09.2011 FR 1158336
(43) Date de publication de la demande: 27.03.2013
(73) Titulaire: IMV Technologies, 61300 Saint-Ouen-Sur-Iton (FR)
(72) Inventeur: Beau, Christian, 78117 Toussus Le Noble (FR); Camus, Agnès, 61370 Sainte Gauburge Sainte Colombe (FR); Schmitt, Eric, 53700 Villaines-La-Juhel (FR)
(74) Mandataire: Santarelli

(56) Documents cités:
- WO-A1-2005/108885
- JP-B- 6 001 142
- US-A- 3 797 272
- US-A- 4 227 381

## Description

La présente invention a trait au domaine général de la congélation de substances biologiques, en particulier aux procédés de congélation d'une pluralité de tubes de conditionnement chacun rempli d'un volume prédéterminé de substance biologique.

Ces tubes sont par exemple des tubes capillaires également appelés « paillettes ».

L'invention concerne également des systèmes de congélation pour la mise en oeuvre de tels procédés.

On connaît déjà des procédés de congélation mis en oeuvre par des systèmes de congélation ayant la forme d'un congélateur conventionnel dans lequel sont disposés horizontalement des racks, lesquels sont pourvus d'emplacements destinés à recevoir des paillettes préalablement remplies d'un certain volume de substance biologique. En variante, chaque paillette est introduite dans un tube cylindrique ou hexagonal, quelques uns de ces tubes cylindriques ou hexagonaux sont introduits dans un gobelet et plusieurs gobelets sont disposés verticalement et superposés à l'intérieur d'un canister disposé quant à lui verticalement dans le congélateur.

On connaît également du brevet américain US 4,227,381 un système de congélation, notamment de paillettes remplies de substance biologique, pourvu d'une enceinte de refroidissement traversée par un flux d'agent de refroidissement entrant dans cette enceinte par un conduit d'admission et sortant de cette enceinte par un conduit de sortie. Cette enceinte présente un espace interne dans lequel est introduit un unique container ayant une pluralité d'étuis de conditionnement rangés de manière ordonnée, c'est-à-dire alignés côte à côte et superposés, à l'intérieur du container. Dans chaque étui de conditionnement est rangée une paillette ou une ampoule préalablement remplie d'un volume de substance biologique à congeler.

Le container, les étuis introduits dans ce container ainsi que les paillettes ou ampoules remplies chacune d'un volume de substance biologique et introduites dans ces étuis sont disposés dans l'enceinte de refroidissement suivant une direction similaire à celle définie entre son raccord d'entrée et son raccord de sortie.

Le système est en outre pourvu d'une unité d'entraînement en rotation de l'enceinte de refroidissement sur elle-même. Pour cela, l'enceinte de refroidissement est en inter-engagement mécanique permettant l'entraînement en rotation au niveau de son raccord d'admission. Cette enceinte de refroidissement est en outre en inter-engagement mécanique permettant la rotation au niveau de son raccord de sortie, lequel raccord de sortie est connecté à un conduit de sortie du flux d'agent de refroidissement.

Pour congeler les paillettes, l'enceinte de refroidissement est mise en rotation sur elle-même et le flux d'agent de refroidissement s'écoule le long du container fermé qui comporte les étuis contenant chacun une paillette. Les paillettes sont donc entraînées en rotation tout en étant maintenues dans les étuis, lesquels sont maintenus dans l'unique container.

Le document brevet Japonais JP 6 001142 décrit un système de refroidissement de flacons dans lesquels est introduite une certaine substance. Ce système de refroidissement est pourvu d'une plaque pouvant être refroidie et d'un convoyeur disposé en regard de cette plaque. Le système de refroidissement est en outre pourvu d'une entrée et d'une sortie chacune ménagée en rampe pour que les flacons puissent entrer dans le système et en sortir. Le convoyeur comporte une pluralité d'organes d'entraînement configurés pour venir se loger partiellement derrière un flacon et pousser ce dernier entre l'entrée et la sortie du système.

La demande internationale WO 2005/108885 décrit un appareil pour la congélation de liquide contenu dans des containers ayant une forme d'ampoule. Cet appareil comporte un bac au fond duquel est introduit du nitrogène liquide. Ce bac comporte en outre un convoyeur disposé au-dessus du nitrogène liquide, lequel convoyeur est configuré pour que les ampoules puissent être changées de position entre le moment où elles se trouvent dans le bain de nitrogène liquide (position verticale) et le moment où elles en sortent (position horizontale).

Le brevet américain US 3,797,272 décrit un congélateur pourvu d'un tambour entraîné en rotation autour d'un axe et dans lequel sont disposés de manière amovible des réceptacles ayant, en section, une forme de V.

L'invention concerne un procédé de congélation visant à améliorer les performances de congélation des procédés de l'état de la technique, de manière simple, commode et économique.

L'invention a ainsi pour objet, sous un premier aspect, un procédé de congélation suivant la revendication 1 d'une pluralité de tubes de conditionnement chacun rempli d'un volume prédéterminé de substance biologique, comportant l'étape de disposer chaque dit tube de conditionnement directement dans une unité de conditionnement placée dans une enceinte de refroidissement puis de faire traverser ladite enceinte de refroidissement par un flux d'agent de refroidissement et simultanément d'entraîner en rotation ladite unité de conditionnement ; le procédé étant caractérisé en ce qu'il comporte l'étape de se procurer ladite unité de conditionnement avec une contenance plus grande que ladite pluralité de tubes de conditionnement ; en ce que l'étape de disposer chaque dit tube de conditionnement directement dans une unité de conditionnement s'effectue en plaçant ladite pluralité de tubes de conditionnement dans ladite unité de conditionnement ; et en ce que ladite étape d'entraîner en rotation ladite unité de conditionnement est mise en oeuvre en mettant en mouvement chaque dit tube de conditionnement par rapport à ladite unité de conditionnement et par rapport aux autres dits tubes de conditionnement ; ladite unité de conditionnement est entraînée en rotation sur elle-même ; ladite unité de conditionnement forme un réceptacle en forme de tambour et présente au moins une paroi latérale longitudinale et un espace interne ; et ladite pluralité de dits tubes de conditionnement est placée dans ledit espace interne de sorte que chaque dit tube de conditionnement s'étend longitudinalement suivant la direction longitudinale dans laquelle s'étend ladite au moins une paroi latérale.

La disposition d'une pluralité de tubes de conditionnement dans une même unité de conditionnement, laquelle est donc le contenant primaire des tubes de même que chaque étui individuel du système antérieur susmentionné, le fait que l'unité de conditionnement est mise en rotation de sorte que chaque tube de conditionnement rempli d'un volume prédéterminé de substance biologique est mis en mouvement par rapport à l'unité et aussi par rapport aux autres tubes de conditionnement, permet d'opérer un brassage de la pluralité de tubes.

Ce brassage permet d'obtenir un échange thermique particulièrement satisfaisant pour la congélation des tubes de conditionnement.

Les paramètres permettant d'influer sur l'échange thermique sont le taux de remplissage de l'unité de conditionnement, la vitesse de rotation de l'unité de conditionnement et la vitesse du flux d'agent de refroidissement.

On observera que dans les systèmes connus, le rangement ordonné des tubes de conditionnement (autrement dit une certaine homogénéité de rangement) est considéré comme une étape indispensable à l'homogénéité de congélation de ces tubes.

Les travaux effectués par les inventeurs ont en effet révélé que, de façon surprenante, le brassage des tubes de conditionnement dans l'unité de conditionnement non seulement n'empêche pas l'homogénéité de congélation, mais favorise au contraire cette homogénéité.

Le procédé de congélation de tels tubes de conditionnement selon l'invention est donc particulièrement simple et commode à mettre en oeuvre.

Selon des caractéristiques préférées, simples, commodes et économiques du procédé selon l'invention :
- ladite unité de conditionnement est placée dans ladite enceinte de refroidissement de sorte que ledit flux rencontre ladite au moins une paroi latérale ; et/ou
- le procédé comporte l'étape d'introduire ladite au moins une unité de conditionnement dans ladite enceinte de refroidissement.

L'invention a aussi pour objet, sous un deuxième aspect, un système de congélation tel que défini par la revendication 4.

Selon des caractéristiques préférées, simples, commodes et économiques du système selon l'invention :
- ladite au moins une unité de conditionnement est configurée pour être disposée dans ladite enceinte de refroidissement de telle sorte que ledit flux d'agent de refroidissement rencontre ladite au moins une paroi latérale ;
- ladite au moins une unité de conditionnement présente au moins une paroi latérale longitudinale pourvue d'une surface latérale interne conformée pour mettre en mouvement chaque dit tube de conditionnement par rapport à ladite paroi latérale longitudinale et par rapport aux autres dits tubes de conditionnement lorsque ladite au moins une unité de conditionnement est en rotation ; et/ou
- ladite au moins une unité de conditionnement présente au moins un relief ménagé sur ladite surface latérale interne, lequel relief est configuré pour mettre en mouvement chaque dit tube de conditionnement par rapport à ladite paroi latérale longitudinale et par rapport aux autres dits tubes de conditionnement lorsque ladite au moins une unité de conditionnement est en rotation.

Selon d'autres caractéristiques préférées, simples, commodes et économiques du système selon l'invention, ladite au moins une unité de conditionnement présente au moins une paroi latérale pourvue d'au moins une ouverture à travers laquelle peut passer ledit flux d'agent de refroidissement.

Grâce à cette ouverture, les tubes de conditionnement subissent à la fois un phénomène de convection thermique et un phénomène de conduction thermique pour la congélation du volume prédéterminé de substance biologique présent dans chacun de ces tubes. En effet, le phénomène de conduction se produit lorsque les tubes de conditionnement entrent en contact avec l'intérieur de l'unité de conditionnement du fait que le flux d'agent de refroidissement entre également en contact avec cette unité (sur une surface latérale externe) ; et le phénomène de convection se produit lorsque ce flux d'agent de refroidissement traverse l'ouverture et entre directement en contact avec les tubes de conditionnement.

Selon encore d'autres caractéristiques préférées, simples, commodes et économiques du système selon l'invention :
- ladite au moins une ouverture présente la forme d'une fenêtre s'étendant suivant ladite direction longitudinale ;
- ladite au moins une ouverture est formée par une série de fentes débouchantes et successivement disposées suivant ladite direction longitudinale, chaque fente ayant une direction principale distincte de ladite direction longitudinale ;
- ladite au moins une unité de conditionnement comporte un couvercle amovible qui est métallique ; et ladite au moins une unité de conditionnement est pourvue d'au moins un organe magnétique permettant la fixation par aimantation dudit couvercle amovible sur ladite au moins une unité de conditionnement ;
- ladite enceinte de refroidissement présente une forme parallélépipédique et est divisée en une zone inférieure dans laquelle est disposé un dispositif d'expulsion et une zone supérieure dans laquelle est disposée ladite au moins une unité de conditionnement, ledit dispositif d'expulsion étant configuré pour expulser ledit agent de refroidissement de ladite zone inférieure vers ladite au moins une unité de conditionnement dans ladite zone supérieure ;
- ladite enceinte de refroidissement est formée par une pluralité de zones disposées dans une veine et dont l'une au moins desdites zones est une zone de congélation dans laquelle est introduite ladite au moins une unité de conditionnement et sur laquelle est montée ladite unité d'entraînement en rotation ; et/ou
- le système comporte un organe de maintien de ladite au moins une unité de conditionnement, lequel organe est pourvu d'au moins un rouleau mobile en rotation sur lui-même et sur lequel ladite unité de conditionnement est configurée pour reposer lorsqu'elle est mise en rotation sur elle-même.

On va maintenant poursuivre l'exposé de l'invention par la description d'exemples de réalisation, donnée ci-après à titre illustratif et non limitatif, en référence aux dessins annexés sur lesquels :
- la figure 1 représente, schématiquement en perspective, un système de congélation conforme à un premier mode de réalisation, lequel système est partiellement arraché pour montrer son intérieur et en particulier une unité de conditionnement qui y est disposée ;
- la figure 2 est une vue de derrière du système de la figure 1 ;
- la figure 3 est une vue prise en coupe selon III sur la figure 2 ;
- la figure 4 est une vue de détail prise selon IV sur la figure 3 ;
- la figure 5 représente, schématiquement en perspective et de manière isolée, l'unité de conditionnement de la figure 1 ;
- la figure 6 est une vue en coupe prise selon VI sur la figure 5 ;
- la figure 7 représente, schématiquement en perspective et de manière éclatée, l'unité de conditionnement de la figure 5 ;
- les figures 8 à 10 sont des vues similaires à celles des figures 5 à 7 montrant une variante de l'unité de conditionnement ;
- la figure 11 représente schématiquement un système de congélation conforme à un deuxième mode de réalisation, lequel système comporte une zone de congélation dans laquelle sont introduites plusieurs unités de conditionnement ;
- la figure 12 représente, schématiquement en perspective et de manière isolée, la zone de congélation visible à la figure 11;
- la figure 13 représente, schématiquement en perspective et de manière éclatée, la zone de congélation de la figure 12 ;
- la figure 14 est une vue de face de la zone de congélation de la figure 12 ;
- les figures 15 et 16 sont des vues prises en coupe selon XV et XVI sur la figure 14 ; et
- la figure 17 représente schématiquement un ensemble de congélation d'une pluralité de tubes de conditionnement chacun rempli d'un volume de substance biologique.

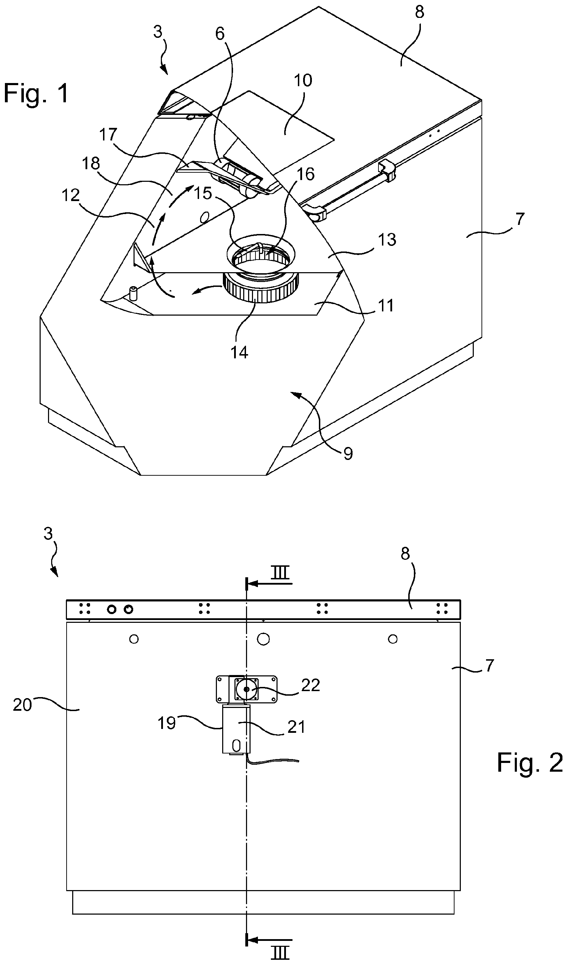

En se référant aux figures 1 à 3 et 11, on voit deux systèmes de congélation 3 et 203 configurés pour congeler des tubes de conditionnement 5 remplis chacun d'un volume faible prédéterminé de substance biologique.

La notion de congélation est ici comprise au sens général du terme et signifie donc la descente en température jusqu'à une température négative, en dessous de 0°C.

La substance biologique à congeler est ici formée par exemple par du liquide séminal ou encore des échantillons tissulaires. Cette substance biologique nécessite d'être amenée à une température négative inférieure à leurs zones de transition vitreuses afin de pouvoir la manipuler avec le minimum de risque pour les cellules biologiques qu'elle comporte.

La notion de congélation englobe donc ici des températures pouvant descendre jusqu'à -140°C, voire même des températures inférieures à -150°C.

La congélation de cette substance biologique nécessite de suivre une cinétique de températures pour l'amener à une température négative inférieure à leur zone de transition vitreuse.

Cette cinétique de températures est possible par la mise en oeuvre d'une première phase dite d'équilibration et d'une deuxième phase dite de congélation, laquelle peut être divisée en plusieurs sous-phases de congélation.

Par exemple, après remplissage des tubes de conditionnement à température ambiante, ces tubes sont disposés à une température de l'ordre de +4°C durant une première période déterminée, par exemple quelques heures, afin de les faire reposer. C'est la phase d'équilibration. Ensuite, ces tubes sont soumis à une première descente en température, d'abord de +4°C à -10°C avec un pas de l'ordre de -5°C/min ; puis une deuxième descente en température de -10°C à -140°C avec un pas de l'ordre de -40°C/min. Ce sont respectivement les première et deuxième sous-phases de congélation que comporte la phase de congélation.

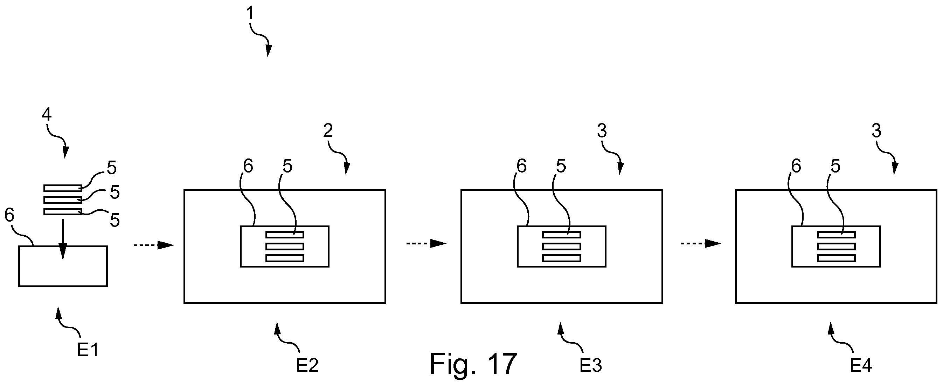

Pour effectuer une telle cinétique, il est nécessaire de disposer d'un ensemble de congélation 1 comportant un système d'équilibration 2 et plusieurs systèmes de congélation 3. Un tel ensemble est visible à la figure 17.

La figure 17 illustre le processus de congélation tel qu'il est défini ci-dessus.

Bien entendu, des étapes préalables et postérieures sont nécessaires.

Tout d'abord, les tubes de conditionnement, appelés ici paillettes 5, sont chacun remplis d'un volume prédéterminé de substance biologique dans des machines de remplissage spécifiques (étape de remplissage non représentée), ici à température ambiante, soit environ 20°C. Pour réaliser cette étape de remplissage, les paillettes sont généralement disposées à plat sur un convoyeur.

Suite à cette étape de remplissage des paillettes 5, le processus de congélation tel que défini ci-dessus peut débuter par une étape d'introduction d'un certain nombre de paillettes 5 dans une unité de conditionnement 6 formant un réceptacle appelé dans la suite de la description tambour. Cette étape, aussi appelée phase de remplissage des tambours 6, est notée E1 sur la figure 17 et est effectuée sur un poste de remplissage 4 de tambours 6.

Les paillettes 5 sont mises dans l'unité de conditionnement 6.

En outre, on observera qu'une pluralité de paillettes est introduite dans l'unité 6, par exemple entre environ 50 et environ 200 paillettes, ce qui représente un volume de remplissage du tambour 6 d'environ 10% à environ 30% de sa contenance.

Sa contenance est donc plus grande que la pluralité de paillettes.

Le processus de congélation se poursuit par une étape d'équilibration E2, appelée aussi phase d'équilibration ou encore première phase, effectuée dans un système d'équilibration 2.

Ce système d'équilibration 2 comporte généralement une vitrine réfrigérée (non représentée) dans laquelle est introduit le tambour 6 contenant les paillettes 5.

Comme indiqué ci-dessus, la vitrine réfrigérée est à une première température prédéterminée, par exemple de l'ordre de +4°C. Le tambour 6 est disposé dans cette vitrine réfrigérée durant une première période prédéterminée, par exemple quelques heures.

Le processus de congélation se poursuit par l'extraction du tambour 6 du système d'équilibration 2 et la disposition de ce tambour 6 dans un premier système de congélation 3 pour une première étape de congélation E3, appelée aussi première sous-phase de congélation.

Ce premier système de congélation 3 est à une deuxième température prédéterminée, par exemple de l'ordre de +4°C également et ce premier système de congélation 3 est en outre configuré pour faire descendre cette deuxième température prédéterminée jusqu'à par exemple -10°C à l'aide d'un flux d'agent de refroidissement tel que de l'azote gazeux à un pas d'environ -5°C/min.

Le processus de congélation se poursuit encore par l'extraction du tambour 6 du premier système de congélation 3 puis par l'insertion de ce tambour 6 dans un deuxième système de congélation 3 (similaire au premier système de congélation 3) pour une deuxième étape de congélation E4, appelée aussi deuxième sous-phase de congélation.

Ce tambour 6 est disposé dans ce deuxième système de congélation 3 à une troisième température prédéterminée, par exemple de l'ordre de -10°C.

Ce deuxième système de congélation 3 est configuré pour abaisser cette troisième température prédéterminée jusqu'à atteindre par exemple -140°C, voire -150°C grâce à la circulation d'un flux d'agent de refroidissement tel que de l'azote gazeux également, à un pas d'environ -40°C/min.

Le processus de congélation tel que défini ci-dessus est terminé à la fin de l'étape E4.

Au cours des étapes E1 à E4, seulement une manipulation des paillettes 5 est nécessaire puisque c'est ensuite le tambour 6 qui est manipulé avec les paillettes 5 à l'intérieur.

Une étape postérieure de stockage est généralement mise en oeuvre. Cette étape de stockage nécessite l'extraction du tambour 6 du deuxième système de congélation 3 et la mise en place directement du tambour 6 dans un système de stockage (non représenté) par exemple formé d'un bac rempli d'un agent de refroidissement tel que de l'azote liquide qui va accueillir directement le tambour 6. En variante, les paillettes 5 sont extraites du tambour 6 et sont directement immergées dans ce bac d'azote liquide ; ou les paillettes 5 sont extraites du tambour 6, introduites en plus grande quantité dans un gobelet spécifique, lequel est immergé dans le bac d'azote liquide.

Les figures 1 à 3 illustrent un système de congélation 3.

Ce système de congélation 3 présente une forme parallélépipédique rectangle similaire à celle d'un congélateur conventionnel.

Ce système de congélation 3 présente un coffre 7 surmonté d'un couvercle 8 articulé à ce coffre 7.

Ce coffre 7 présente un espace interne formant une enceinte de refroidissement 9. Le couvercle 8 présente une ouverture vitrée 10 permettant de voir à l'intérieur de cette enceinte 9.

L'enceinte de refroidissement 9 forme une chambre froide divisée en une zone inférieure 11 et en une zone supérieure 12.

La zone inférieure 11 est une zone d'arrivée et d'expulsion d'un agent de refroidissement tel que de l'azote passant de sa forme liquide à sa forme gazeuse.

Le système de congélation 3 présente en outre une plaque de séparation partielle 13 formant une interface entre la zone supérieure 12 et la zone inférieure 11 ainsi qu'un dispositif d'expulsion 14, tel qu'une turbine pourvue de pales, disposée sous la plaque 13 dans la zone inférieure 11.

La plaque de séparation 13 est pourvue d'un orifice circulaire traversant 16 qui débouche au centre de la turbine 14.

Le système de congélation 3 présente en outre un conduit de cheminement 15 de l'azote sous forme liquide qui débouche au centre de l'orifice 16.

Ce conduit 15 fait partie d'un dispositif d'injection pourvu notamment d'une électrovanne (non représentée), laquelle est configurée pour délivrer de l'azote présent dans un réservoir spécifique et pour réguler le débit d'azote liquide injecté dans l'enceinte de refroidissement 9.

On voit également sur la figure 1 que le tambour 6 dans lequel sont insérées des paillettes 5 (non visibles) est introduit dans la zone supérieure 12 du système de congélation 3.

Le système de congélation 3 présente en outre une plaque de guidage 17 fixée contre une paroi interne 18 dans la zone supérieure 12.

Cette plaque de guidage 17 est disposée à proximité du tambour 6 et présente des formes spécifiques configurées pour guider le flux d'agent de refroidissement, comme cela sera décrit ci-après.

Le système de congélation 3 présente en outre une unité d'entraînement en rotation 19 formée ici par un moteur électrique 21 associé à un réducteur 22.

Cette unité d'entraînement en rotation 19 est fixée sur une face arrière 20 du coffre 7, c'est-à-dire à l'extérieur de l'enceinte de refroidissement 9 (figures 2 à 4).

Cette unité d'entraînement en rotation 19 est en outre pourvue d'un arbre rotatif 23 qui s'étend à partir du réducteur 22, qui traverse un orifice traversant 24 ménagé dans la face arrière 20 du coffre 7, avec cet orifice 24 qui débouche dans la zone supérieure 12.

Cet arbre rotatif 23 présente une extrémité opposée au réducteur 22 qui est disposée dans la zone supérieure 12, laquelle extrémité est pourvue d'un support 25 formé ici par un épaulement conformé sur cet arbre 23.

Ce support 25 présente en son centre une portion magnétique 26.

L'ensemble support 25 et sa portion magnétique 26 forment une interface de connexion du tambour 6.

Bien entendu, ce système de congélation 3 est configuré de telle sorte que la zone supérieure 12 est au moins partiellement étanche aux fluides gazeux malgré l'orifice 24.

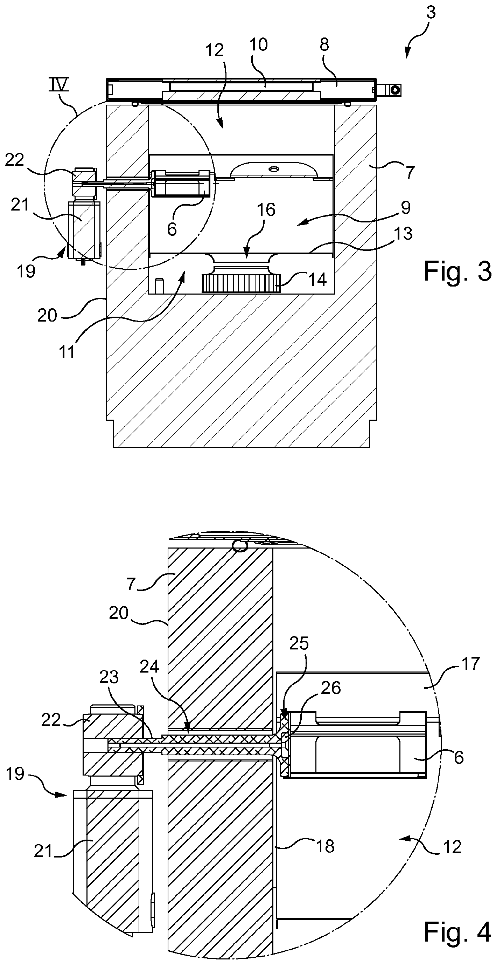

On voit sur les figures 3 et 4 que le tambour 6 est fixé directement sur l'interface de connexion formée par le support 25 et sa portion 26.

Ainsi, ce tambour 6 est configuré pour être entraîné en rotation par l'arbre rotatif 23 de l'unité d'entraînement en rotation 19.

Le tambour 6 est ici métallique, amovible et fixé de manière non permanente sur le support 25 par aimantation grâce à la portion magnétique 26.

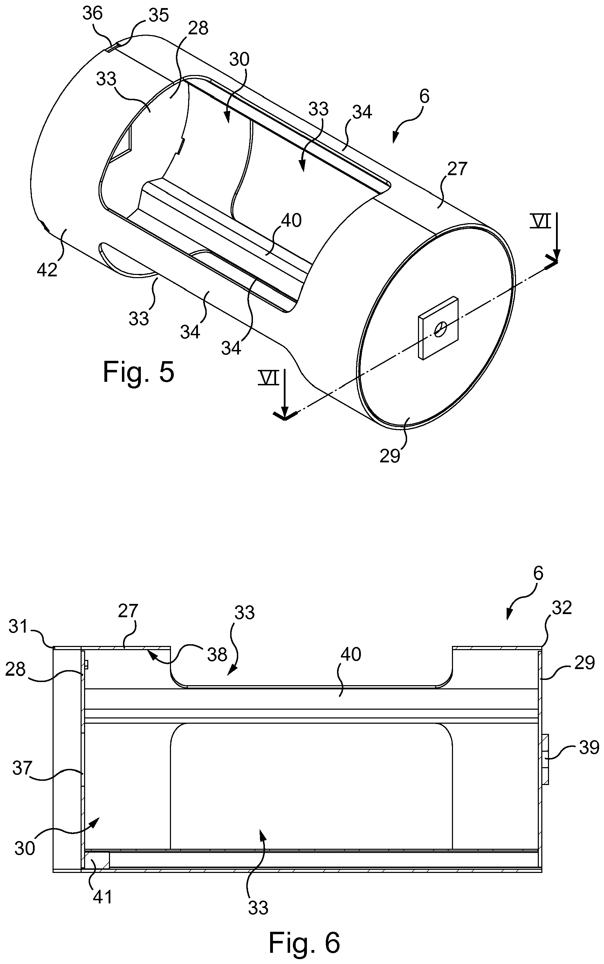

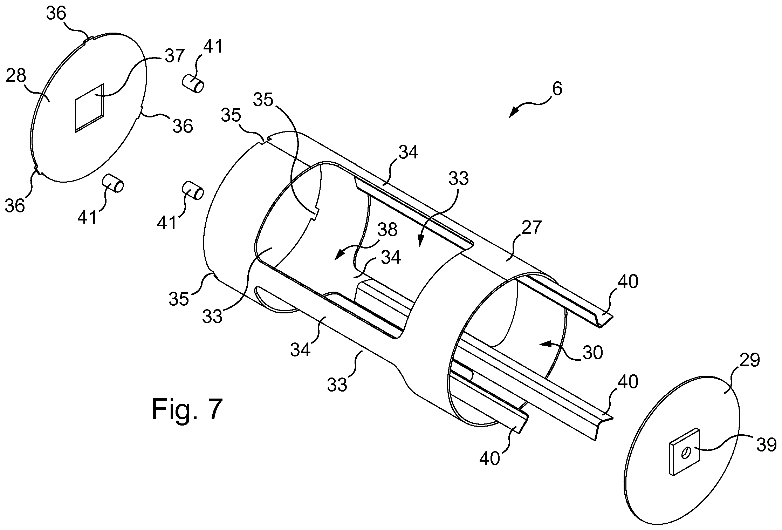

On va maintenant décrire plus en détail le tambour 6 en référence aux figures 5 à 7.

Le tambour 6 présente une forme générale circulaire, voire cylindrique.

Ce tambour 6 est pourvu d'une paroi latérale 27 cylindrique, d'une paroi frontale 28 et d'une paroi de fond 29 ; lesquelles parois 27, 28 et 29 définissent un espace interne 30 au tambour 6, significatif de sa contenance.

La paroi latérale cylindrique 27 s'étend suivant une direction générale longitudinale.

La paroi latérale 27 présente ici une première extrémité 31 et une deuxième extrémité 32 opposée à la première extrémité 31.

Le tambour 6 présente en outre trois ouvertures ayant chacune la forme d'une fenêtre 33 ménagée dans la paroi latérale 27.

Ces fenêtres 33 s'étendent à la fois longitudinalement et sur le contour de cette paroi latérale 27.

Ces trois fenêtres 33 sont régulièrement réparties sur le contour de la paroi latérale 27 et sont séparées les unes des autres par des bras 34 sur le contour de cette paroi 27.

La paroi latérale 27 présente en outre à sa première extrémité 31 trois échancrures 35 régulièrement réparties sur le contour de cette extrémité 31.

La paroi frontale 28 a une forme de plaque circulaire formant un couvercle amovible et cette paroi frontale 28 est métallique.

Du contour de cette paroi frontale 28 saillent trois ergots 36 régulièrement répartis et configurés pour être reçus à l'intérieur des échancrures 35 de la paroi latérale 27 ; permettant ainsi un bon assemblage du couvercle amovible formé par cette paroi frontale 28 avec la paroi latérale 27.

Cette paroi frontale 28 présente en outre un orifice rectangulaire 37 ménagé en son centre.

La paroi de fond 29 a également une forme de plaque circulaire et cette paroi de fond 29 est métallique.

Un élément de raccordement 39 saille centralement de cette paroi de fond 29. Cet élément de raccordement 39 présente une forme rectangulaire et est percé en son centre.

Le tambour 6 présente en outre trois aubes 40 longitudinales ayant chacune la forme d'une plaque pliée à 120°C environ.

Ces trois aubes 40 sont fixées sur une surface latérale interne 38 de la paroi latérale 27 de manière longitudinale au niveau des bras 34 respectifs.

Chaque aube 40 présente un pli dirigé vers l'intérieur du tambour 6.

Comme on le verra plus en détail plus loin, ces trois aubes 40 conforment la surface latérale interne 38 de la paroi latérale 27 de telle manière que les paillettes 5 introduites dans le tambour 6 sont mises en mouvement les unes par rapport aux autres et par rapport à la paroi latérale 27 de l'unité 6, autrement dit les paillettes 5 sont brassées, lorsque ce dernier est en rotation sur lui-même, avec un axe de rotation qui est coaxial à la paroi latérale 27.

Le tambour 6 présente en outre trois organes magnétiques 41 formés ici par des plots.

Ces plots 41 sont chacun disposés entre une aube 40 et la surface latérale interne 38 de la paroi latérale 27, à proximité de la première extrémité 31 de cette paroi latérale 27.

La paroi frontale 28 formant le couvercle amovible peut ainsi être disposée contre la surface latérale interne 38 de la paroi latérale 27 (autrement dit à l'intérieur de cette paroi latérale 27) et est maintenue par aimantation grâce au plot magnétique 41.

A l'opposé, la paroi de fond 29 est fixée de manière permanente à la paroi latérale 27 au niveau de sa deuxième extrémité 32.

On remarquera que la paroi frontale 28 est montée à proximité de la première extrémité 31 de la paroi latérale 27 mais pas à fleur de cette première extrémité 31, contrairement à la paroi de fond 29 qui est montée à fleur de la deuxième extrémité de la paroi latérale 27.

On va maintenant décrire le procédé de congélation des paillettes 5 à l'aide du système de congélation 3.

Comme on l'a vu en référence à la figure 17, un utilisateur voulant mettre en oeuvre l'ensemble du processus de congélation des paillettes doit sélectionner un nombre prédéterminé, ou pas, de paillettes 5 et introduire ces paillettes 5 dans l'espace interne 30 du tambour 6 (étape E1).

Les paillettes 5 sont disposées en vrac mais longitudinalement sur la direction longitudinale dans laquelle s'étend la paroi latérale 27.

Bien entendu, le couvercle amovible formé par la paroi frontale 28 du tambour 6 est mis en place de manière à fermer frontalement le tambour 6 pour que les paillettes 5 ne puissent s'échapper de l'espace interne 30 du tambour 6.

On notera que les paillettes 5 doivent avoir une longueur adaptée à la longueur du tambour 6 afin qu'elles ne s'échappent pas par les fenêtres 33.

Ensuite, le tambour 6, qui est ici amovible, est introduit dans la zone supérieure 12 du système de congélation 3 en ayant préalablement ouvert le couvercle 8.

Le tambour 6 est disposé horizontalement en regard du support 25 de l'arbre rotatif 23, avec la paroi frontale 28 qui vient se fixer par aimantation à ce support 25 grâce à cette paroi frontale qui est métallique et à la portion magnétique 26 que comporte ce support 25.

On notera qu'ici le tambour 6 est monté coaxial avec l'arbre rotatif 23. L'axe de rotation du tambour 6 est donc également coaxial à la paroi latérale 27 et le tambour 6 est ainsi configuré pour être entraîné en rotation sur lui-même.

Ensuite, l'utilisateur peut mettre en marche l'unité d'entraînement en rotation 19, c'est-à-dire alimenter électriquement le moteur électrique 21 pour mettre en rotation l'arbre rotatif 23 et ainsi mettre en rotation sur lui-même le tambour 6.

La mise en rotation sur lui-même du tambour 6 permet, grâce aux trois aubes 40 de mettre en mouvement de la manière indiquée plus haut les paillettes 5 disposées dans ce tambour 6.

L'utilisateur peut ensuite faire passer un flux de l'agent de refroidissement dans la zone supérieure 12 afin que ce flux rencontre le tambour 6 et congèle les volumes de substance biologique.

Le chemin fluidique emprunté par l'azote gazeux est représenté par des flèches sur la figure 1.

Pour cela, le dispositif d'injection (non représenté) est mis en fonctionnement afin d'injecter l'azote liquide via le conduit 15 dans la zone inférieure 11, au centre de la turbine 14.

L'azote liquide est injecté au dessus et au centre de la turbine 14, au niveau de l'orifice 16 ménagé dans la plaque de séparation 13.

L'azote liquide est ainsi amené dans la zone inférieure 11 qui est sensiblement à la pression atmosphérique.

De ce fait, l'azote liquide subit un phénomène de détente puisqu'il est préalablement sous pression et ce phénomène de détente le fait passer de sa phase liquide à sa phase gazeuse de sorte que les pales de la turbine 14 expulsent le flux d'azote gazeux dans la zone supérieure 12 en le faisant tout d'abord cheminer sous la plaque 13.

En effet, ce flux d'azote gazeux s'écoule d'abord sous la plaque de séparation 13 puis rencontre des parois arrondies (non représentées) qui le guident de la zone inférieure 11 vers la zone supérieure 12 de sorte que le flux d'azote gazeux s'élève dans la zone supérieure 12 en direction du tambour 6 qui est en rotation sur lui-même.

Le flux d'azote gazeux continue son chemin jusqu'à rencontrer une face inférieure de la plaque de guidage 17 qui est configurée de telle sorte que le flux d'azote gazeux est dirigé directement vers le tambour 6.

Ce flux d'azote gazeux rencontre donc le tambour 6 et plus particulièrement, le flux d'azote gazeux rencontre successivement et directement la surface latérale externe 42 de la paroi latérale 27 et les paillettes 5 puisque le flux d'azote gazeux passe à travers les fenêtres 33 (et par conséquent le flux rencontre aussi la surface latérale interne 32).

Ici, le flux d'azote gazeux rencontre transversalement le tambour 6, c'est-à-dire que ce flux vient buter sensiblement perpendiculairement contre la paroi latérale 27 et entre aussi sensiblement perpendiculairement dans l'espace interne 30 via les fenêtres 33.

Cette étape de congélation (ou sous étape de congélation) est réalisée pendant une période prédéterminée.

Ici, les volumes de substance biologique présents dans les paillettes 5 bénéficient d'un bon échange thermique du fait à la fois du brassage de ces paillettes 5, du phénomène de conduction qu'ils subissent par le biais de la paroi latérale 27 et du phénomène de convection qu'ils subissent du fait des fenêtres 33.

Comme on l'a vu précédemment, il est possible pour l'utilisateur de répéter cette étape de congélation dans d'autres systèmes de congélation à des températures de plus en plus basses.

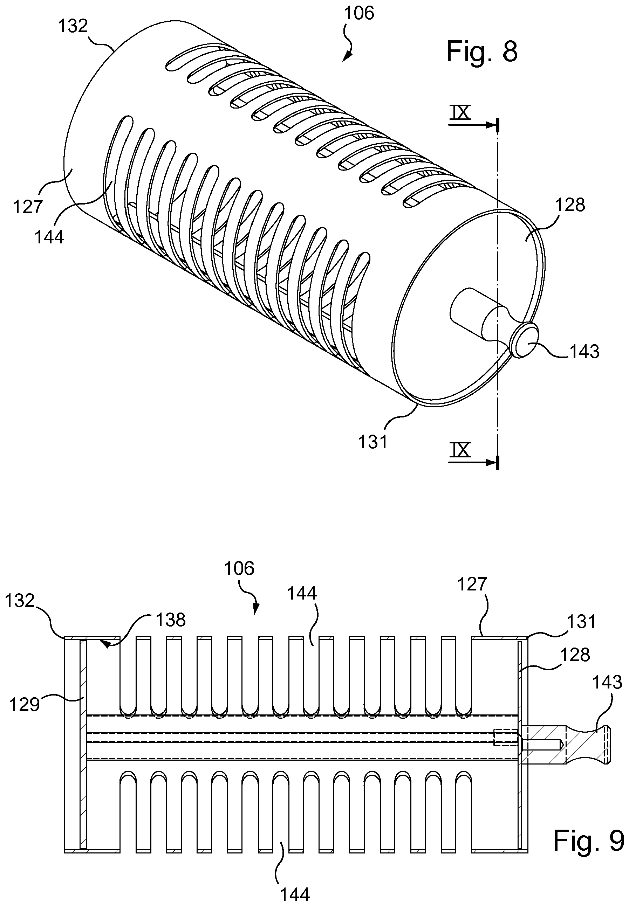

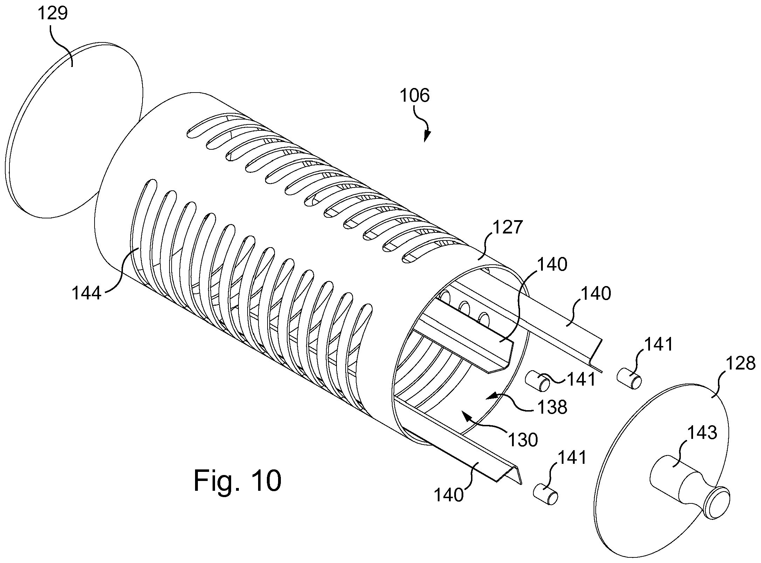

On va maintenant décrire en référence aux figures 8 à 10 une variante de réalisation du tambour.

D'une manière générale on a employé pour les éléments similaires, les mêmes références utilisées pour le tambour 6 illustré sur les figures 5 à 7 mais additionnées du nombre 100.

Le tambour 106, appelé plus généralement unité de conditionnement, a sensiblement la même forme générale que le tambour 6 et présente sensiblement les mêmes caractéristiques que ce tambour 6.

En effet, le tambour 106 a une forme générale cylindrique avec un espace interne 130 défini par une paroi latérale cylindrique 127, une paroi frontale 128 et une paroi de fond 129.

En outre, le tambour 106 présente de manière similaire au tambour 6, trois aubes 140 disposées contre la surface latérale interne 138 de la paroi latérale 127 ainsi que trois plots magnétiques 141 disposés chacun entre une aube 140 et la surface latérale interne 138.

A la différence du tambour 6, le tambour 106 présente des ouvertures ici formées par une série de fentes 144 qui sont débouchantes au travers de la paroi latérale 127 et qui sont successivement disposées suivant la direction longitudinale du tambour 106.

Chaque fente 144 a en outre une direction principale distincte de la direction longitudinale et en particulier ici, ces fentes 144 s'étendent chacune suivant une direction perpendiculaire à la direction longitudinale.

Chaque ouverture du tambour 106 présente douze fentes 144 identiques et le tambour 106, tout comme le tambour 6, présente trois ouvertures régulièrement réparties sur le contour de la paroi latérale 127.

En outre, la paroi latérale 127 du tambour 106 est quant à elle dépourvue d'échancrure au niveau de sa première extrémité 131.

Le tambour 106 présente en outre une portion de préhension 143 ménagée centralement en saillie de la paroi frontale 128, à la place de l'orifice 37 ménagé sur la paroi frontale 28 du tambour 6.

La paroi de fond 129 est quant à elle une plaque métallique pleine et ne présente pas d'élément de raccordement tel que l'élément de raccordement 39 de la paroi de fond 29 du tambour 6.

Tout comme le tambour 6, la paroi frontale 128 du tambour 106 est amovible et montée par aimantation grâce au plot 141 et au fait que cette paroi frontale est métallique ; et cette paroi frontale 128 est montée contre la surface latérale interne 138 de la paroi latérale 127, à proximité de la première extrémité 131, mais pas à fleur de cette première extrémité 131.

A la différence du tambour 6, la paroi de fond 129 du tambour 106 n'est pas montée à fleur de la deuxième extrémité 132 de la paroi latérale 127 mais tout comme la paroi frontale 128, la paroi de fond 129 est montée contre la surface latérale interne 138 de la paroi latérale 127, à proximité de cette deuxième extrémité 132.

Cette paroi de fond 129 est fixée de manière permanente à la paroi latérale 127.

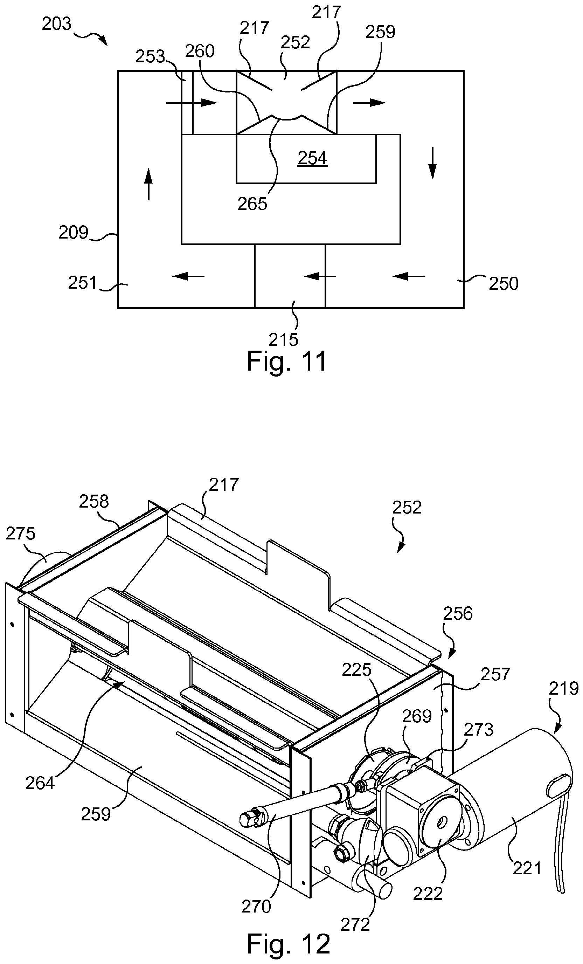

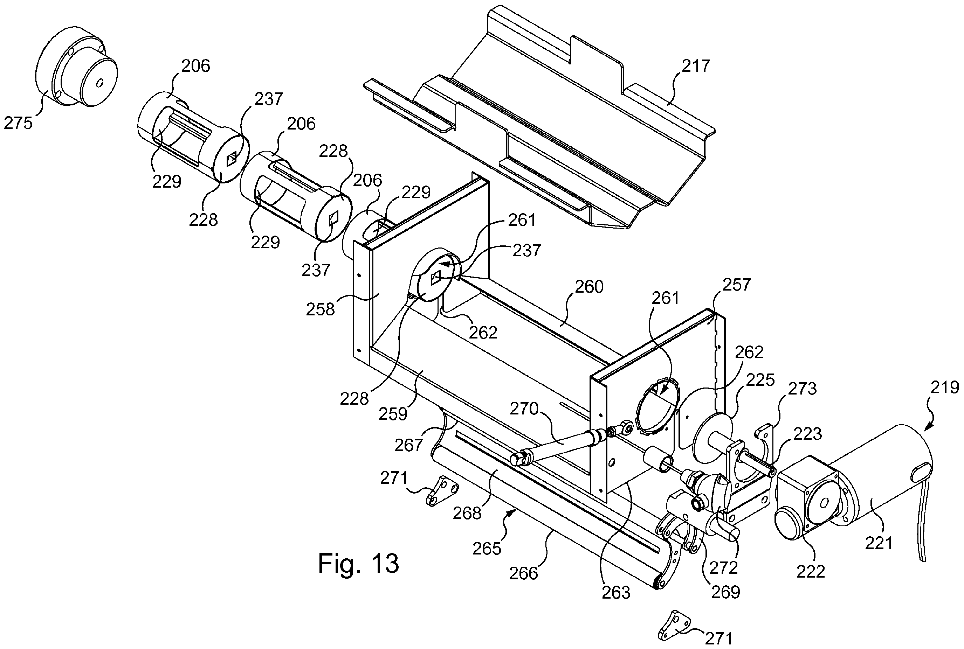

Les figures 11 à 16 illustrent un deuxième mode de réalisation du système de congélation.

D'une manière générale on a employé pour les éléments similaires, les mêmes références utilisées pour le système de congélation 3 des figures 1 à 4 mais additionnées du nombre 200 et les mêmes références utilisées pour le tambour 6 des figures 5 à 7 mais additionnées également du nombre 200.

Le système de congélation 203 présente la forme d'une veine gazeuse représentée très schématiquement sur la figure 11.

Cette veine gazeuse 203 comporte une enceinte de refroidissement 209, un ventilateur centrifuge 250 et une partie 215 d'un dispositif d'injection d'azote liquide provenant d'un réservoir externe (non représenté).

L'enceinte de refroidissement 209 est formée d'un couloir de guidage 251 du flux d'agent de refroidissement (l'azote gazeux), couloir 251 dans lequel est introduit un redresseur statique 253 à proximité d'une zone de congélation 252.

Le redresseur statique 253 permet de diriger convenablement le flux gazeux et en même temps de l'accélérer en direction de la zone de congélation 252, grâce à la structure alvéolée ou grillagée qu'il présente.

Le système de congélation 203 présente en outre une zone de récupération 254 disposée sous la zone de congélation 252.

Le chemin fluidique emprunté par l'azote gazeux est représenté par des flèches sur la figure 11.

La zone de congélation 252 est configurée pour recevoir plusieurs tambours 206 visibles sur les figures 12 à 16.

La zone de congélation 251 présente des nervures de guidage 217, 259 et 260 du flux gazeux à son entrée et à sa sortie ainsi qu'un organe de maintien 265 des tambours 206, comme on le verra en détail ci-après.

La zone de récupération 254 est configurée pour récupérer ces tambours 206 une fois les volumes de substance biologique congelés. Cette zone 254 est formée par un tiroir amovible présentant une plaque de réception (non représentée) des tambours 206 divisant cette zone en deux parties, l'une inférieure dans laquelle est présent de l'azote liquide et l'autre supérieure dans laquelle est présent de l'azote gazeux pour ne pas créer un trop grand gradient de température entre les étapes de congélation, récupération et stockage.

Le système de congélation 203 présente en outre une unité d'entraînement en rotation 219 (non visible sur la figure 11) qui est montée à l'extérieure de la zone de congélation 252.

On va maintenant décrire plus en détail cette zone de congélation 252 en référence aux figures 12 à 16.

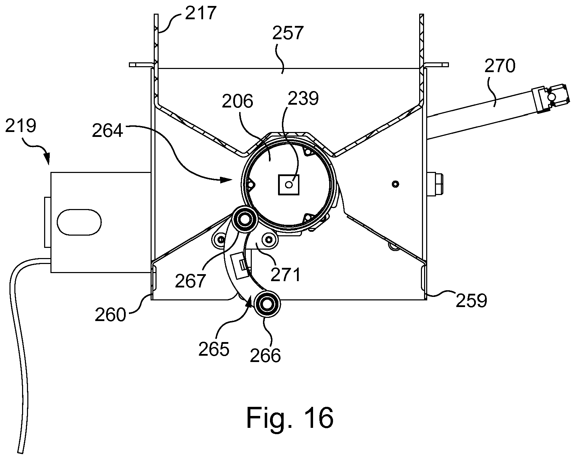

La zone de congélation 252 présente une armature métallique 256 formée par deux flasques 257 et 258 qui sont opposés et par deux supports 259 et 260 (formant les nervures de guidage) qui sont eux aussi opposés (figures 12 et 16) et qui rejoignent chacun les deux flasques 257 et 258.

Chaque flasque présente en son centre un orifice circulaire 261 ainsi qu'une fente 262 ménagée sur une partie de la hauteur de chaque flasque 257, 258 et qui débouche sur un bord inférieur 263 respectif de chacun des flasques 257, 258.

La zone de congélation 252 présente en outre une plaque de guidage 217 (formant aussi une nervure de guidage) du flux d'azote gazeux, laquelle plaque 217 est disposée en regard des supports 259 et 260, entre les flasques 257 et 258 et à l'opposé des bords inférieurs 263 de ces flasques 257, 258.

Ainsi assemblée, la zone de congélation 252 présente un couloir interne 264 destiné à recevoir trois tambours 206.

On remarquera que ces tambours 206 sont identiques au tambour 6 illustré sur les figures 5 à 7.

Ces trois tambours 206 sont disposés dans la zone de congélation 252 et en particulier dans le couloir interne 264 de manière alignée suivant la direction longitudinale.

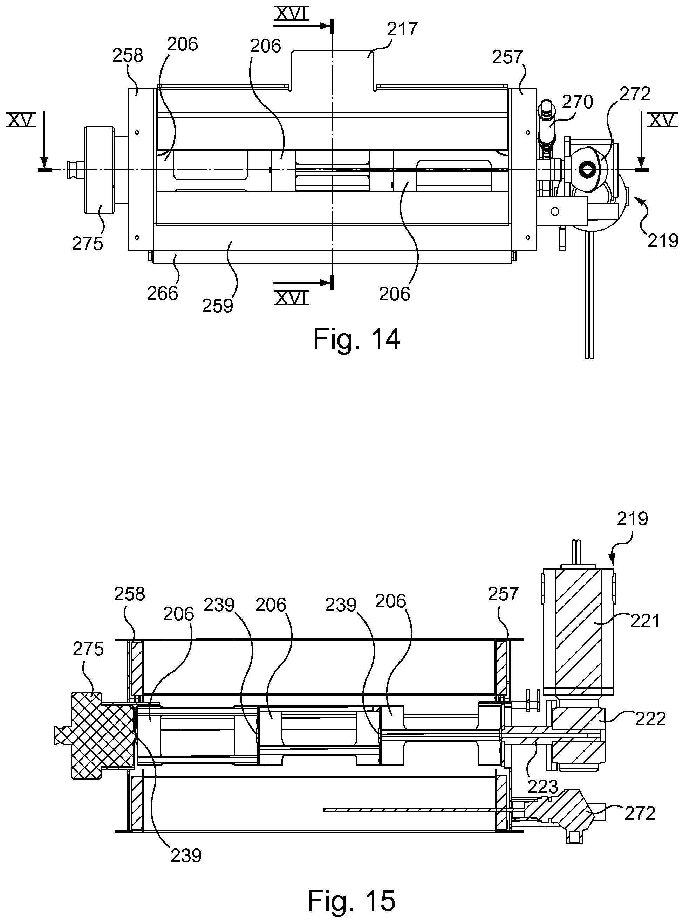

Ces tambours 206 sont fixés deux à deux grâce aux orifices 237 qu'ils comportent dans leur paroi frontale 228 respective et grâce aux éléments de raccordement 239 (figures 15 et 16) qu'ils comportent sur leur paroi de fond 229 respective.

L'organe de maintien 265 de la zone de congélation 252 est formé par deux rouleaux 266 et 267 mobiles en rotation sur eux-mêmes et supportés par une paroi en arc de cercle 268.

Cet organe de maintien 265 présente en outre une pièce de pivotement 269 à laquelle est fixé un vérin 270 configuré pour faire pivoter cet organe de maintien 265.

Grâce à ce vérin 270, l'organe de maintien 265 est configuré pour admettre deux configurations, une configuration de soutien dans laquelle les trois tambours 206 reposent sur les deux rouleaux 266 et 267 et une configuration de déchargement dans laquelle les tambours 206 ne reposent plus sur les rouleaux 266 et 267 et tombent de la zone 252 pour glisser dans la zone de récupération 254, sur sa plaque de séparation.

Comme on le verra ci-après, cette configuration de soutien est admise lorsque les tambours 206 sont en rotation sur eux-mêmes.

Cet organe de maintien 265 est configuré pour être disposé entre les deux flasques 257 et 258, juste en dessous du couloir interne 264 ; et la pièce de pivotement est quant à elle configurée pour être disposée, avec le vérin 270, à l'extérieur du flasque 257.

Cet organe de maintien 265 est fixé au flasque 257 et au flasque 258 par l'intermédiaire de pattes de fixation 271.

La zone de congélation 252 comporte également une sonde de température 272 située à l'extérieur du flasque 257 et pourvue d'une tige entrant dans l'espace interne de la zone 252.

L'unité d'entraînement en rotation 219 est quant à elle similaire à l'unité d'entraînement en rotation 19 visible sur les figures 2 à 4.

Cette unité d'entraînement en rotation 219 est donc pourvue d'un moteur électrique 221, d'un réducteur 222, d'un arbre rotatif 223 et d'un support 225 pourvu d'une portion magnétique (non représentée).

Cette unité d'entraînement en rotation 219 est fixée sur une plaque d'interface 273 elle-même fixée sur le flasque 257.

Un des tambours 206 est configuré pour être fixé par aimantation sur le support 225 de l'unité d'entraînement en rotation 219, lequel support 225 est configuré pour être passé au travers de l'orifice 261 du flasque 257.

La zone de congélation 252 présente en outre un bouchon magnétique 275 situé à l'opposé du support 225 et qui est configuré pour être appuyé contre un autre des tambours 206 (situé à l'opposé du tambour 206 fixé au support 225) dans le but de maintenir les trois tambours 206 alignés et disposés les uns contre les autres.

On va maintenant décrire l'utilisation du système de congélation 203.

On ne répétera pas ici les étapes de remplissage des paillettes avec les volumes de substance biologique, ni de remplissage partiel des tambours avec les paillettes puisque les tambours 206 sont identiques au tambour 6 et sont remplis partiellement de paillettes de la même manière et dans les mêmes proportions que ci-dessus.

A la différence du procédé décrit ci-dessus, trois tambours 206 sont ici insérés dans la zone de congélation 252 de manière alignée longitudinalement.

Pour cela, les trois tambours sont placés les uns contre les autres, c'est-à-dire avec l'élément de raccordement 239 saillant de la paroi de fond 229 d'un premier tambour 206 qui est reçu dans l'orifice 237 de la paroi frontale 228 d'un deuxième tambour et avec l'élément de raccordement 239 saillant de la paroi de fond 229 de ce deuxième tambour 206 qui est reçu dans l'orifice 237 de la paroi frontale 228 d'un troisième tambour 206.

Les trois tambours 206 sont insérés dans le couloir interne 264 de la zone de congélation 252 jusqu'à ce que le premier tambour 206 vienne contre le support 225 de l'unité d'entraînement en rotation 219 où ils sont alors fixés ensemble par aimantation.

Les trois tambours 206 sont insérés dans la zone de congélation 252 par l'orifice 261 du flasque 258 et le bouchon magnétique 275 est à son tour inséré partiellement par cet orifice 262 jusqu'à entrer en contact avec la paroi de fond du troisième tambour 206 ; de sorte que ces trois tambours 206 sont interposés de manière serrée entre ce bouchon 275 et le support 225.

A cet instant, l'organe de maintien 265 est dans sa configuration de soutien et les trois tambours 206 reposent sur les deux rouleaux 266 et 267.

Ensuite, l'unité d'entraînement en rotation 219 est mise en fonctionnement de sorte que les trois tambours 206 sont entraînés en rotation sur eux-mêmes, leur axe de rotation respectif étant coaxial à leur paroi latérale respective.

Les tambours 206 tournent sur eux-mêmes et, comme ils sont soutenus par les rouleaux 266 et 267 mobiles, ces derniers tournent également sur eux-mêmes.

Enfin, l'azote arrive par la partie 215 du dispositif d'injection, se détend pour devenir gazeux, chemine dans le couloir 251, passe à travers le redresseur statique 253 puis chemine vers la zone de congélation 252 jusqu'à être guidé par les nervures formées par la plaque de guidage 217 et le support 260 de cette zone 252 et ainsi être directement envoyé au niveau du couloir interne 264 de cette zone 252 où sont disposés en rotation sur eux-mêmes les tambours 206 qui comportent des paillettes.

Comme les tambours 206 sont similaires au tambour 6, les paillettes qui y sont introduites sont mises en mouvement les unes par rapport aux autres et par rapport à la paroi latérale 27 de l'unité 6, autrement dit les paillettes sont brassées, et bénéficient d'un très bon échange thermique en étant soumises à la fois au phénomène de convection grâce aux fenêtres ménagées dans ces tambours 206 et au phénomène de conduction grâce aux parois latérales de ces tambours 206.

Le flux d'azote gazeux sort ensuite de la zone de congélation 252 pour atteindre le ventilateur centrifuge 250 et ainsi être envoyé à nouveau dans le couloir 251.

Une fois les paillettes des tambours congelées, le vérin 270 est activé de sorte qu'il agit sur la pièce de pivotement 269 afin de faire pivoter l'organe de maintien 265, en particulier la paroi 268 en arc de cercle et ainsi abaisser le rouleau 266.

De cette manière, les tambours 206 ne sont plus soutenus par les deux rouleaux 266, 267 et ces tambours 206 tombent de la zone de congélation 252 et atterrissent sur la plaque de séparation de la zone de récupération 254 formée en tiroir amovible.

Les tambours 206 sont récupérés dans ce tiroir 254, où ils se trouvent dans de l'azote gazeux, avant que ces paillettes ne soient mises dans un lieu de stockage où elles sont immergées dans de l'azote liquide.

Dans des variantes non illustrées :
- le flux d'azote gazeux n'est pas perpendiculaire à la paroi latérale du tambour comme cela est le cas sur les figures 1 à 17, mais le flux est plutôt légèrement incliné ; cela peut être dû au fait que l'axe de rotation des tambours n'est pas coaxial à la paroi latérale et que par conséquent la trajectoire décrite par les tambours est plutôt conique ;
- l'axe de rotation des tambours n'est pas coaxial mais plutôt excentrique ;
- les ouvertures sont différentes de fenêtres ou de fentes, ces ouvertures ont plutôt une forme de grillage ou sont formées par une succession de trous ménagés dans la paroi latérale, ces trous ayant une forme identique ou étant de différentes formes ;
- les tambours comportent plus ou moins de fentes et/ou de fenêtres qu'illustré sur les figures ;
- l'unité de conditionnement contient plus ou moins de paillettes, tant que sa contenance reste plus grande que la pluralité de paillettes ;
- l'unité de conditionnement ne présente pas d'ouverture ménagée sur la paroi latérale longitudinale ;
- l'unité de conditionnement formée par le tambour n'est pas amovible mais plutôt fixe sur l'arbre rotatif de l'unité d'entraînement en rotation ;
- l'unité de conditionnement formée par le tambour n'est pas fixée par aimantation sur l'arbre rotatif mais est plutôt montée de manière auto-serrante ou par le biais d'un clip ou par le biais d'une pince ;
- l'unité de conditionnement formée par le tambour comporte un couvercle latéral ménagé sur la paroi latérale longitudinale plutôt qu'un couvercle formé par la paroi frontale de ce tambour ;
- les reliefs de l'unité de conditionnement ne sont pas formés par des aubes, mais plutôt par des tiges ou par des protubérances ayant d'autres formes, ou il n'y a pas de relief ;
- l'unité de conditionnement présente d'autres formes qu'une forme circulaire, voire cylindrique, par exemple l'unité de conditionnement présente une section rectangulaire ou plus généralement polygonale, voire elliptique ;
- la cinétique de températures est différente car le remplissage des paillettes est directement effectué à une température de l'ordre d'environ 4° et donc l'étape d'équilibration n'est pas nécessaire, les paillettes sont directement disposées dans un système de congélation ;
- le coffre 7 n'est pas pourvu d'un couvercle présentant une ouverture vitrée permettant de voir à l'intérieur de l'enceinte 9 ;
- le remplissage des paillettes se fait à une température de l'ordre d'environ +4°C et de ce fait, aucune étape d'équilibration n'est nécessaire, les paillettes sont donc introduites directement dans le tambour, lequel est introduit dans le système de congélation ;
- les systèmes de congélation ne bénéficient pas d'une convection de type forcé mais plutôt d'une convection naturelle ; et/ou
- l'unité d'entraînement en rotation n'est pas fixée à l'enceinte de refroidissement dans laquelle circule le flux d'agent de refroidissement, mais le système de congélation présente la forme d'un tunnel ayant une succession de zones à différentes températures avec un convoyeur pour faire passer l'unité de conditionnement successivement dans les différentes zones (bien entendu, un élément de séparation tel qu'un petit rideau par exemple en kevlar est prévu entre les différentes zones et cet élément s'efface au passage de l'unité de conditionnement) ; et le convoyeur a par exemple par endroits des rouleaux rotatifs sur lesquels se prend l'unité de conditionnement afin d'être mise en rotation sur elle-même.

On rappelle plus généralement que l'invention ne se limite pas aux exemples décrits et représentés.

## Revendications

1. Procédé de congélation d'une pluralité de tubes de conditionnement chacun rempli d'un volume prédéterminé de substance biologique, comportant l'étape de disposer chaque dit tube de conditionnement (5) directement dans une unité de conditionnement (6 ; 106 ; 206) placée dans une enceinte de refroidissement (9 ; 209) puis de faire traverser ladite enceinte de refroidissement (9 ; 209) par un flux d'agent de refroidissement et simultanément d'entraîner en rotation sur elle-même ladite unité de conditionnement (6 ; 106 ; 206) ; le procédé comprenant l'étape de se procurer ladite unité de conditionnement (6 ; 106; 206) avec une contenance plus grande que ladite pluralité de tubes de conditionnement (5) ; en ce que l'étape de disposer chaque dit tube de conditionnement (5) directement dans une unité de conditionnement (6 ; 106 ; 206) s'effectue en plaçant ladite pluralité de tubes de conditionnement (5) dans ladite unité de conditionnement (6 ; 106 ; 206) ; et en ce que ladite étape d'entraîner en rotation sur elle-même ladite unité de conditionnement (6 ; 106 ; 206) est mise en oeuvre en mettant en mouvement chaque dit tube de conditionnement (5) par rapport à ladite unité de conditionnement (6 ; 106; 206) et par rapport aux autres dits tubes de conditionnement (5) le procédé étant **caractérisé par le fait que** ladite étape d'entraîner en rotation sur elle-même ladite unité de conditionnement (6; 106; 206) brasse lesdits tubes de conditionnement (5); ladite unité de conditionnement (6 ; 106; 206) forme un réceptacle en forme de tambour et présente au moins une paroi latérale longitudinale (27 ; 127) et un espace interne (30 ; 130) ; et ladite pluralité de dits tubes de conditionnement (5) est placée dans ledit espace interne de sorte que chaque dit tube de conditionnement (5) s'étend longitudinalement suivant la direction longitudinale dans laquelle s'étend ladite au moins une paroi latérale (27 ; 127).

2. Procédé selon la revendication 1, **caractérisé en ce que** ladite unité de conditionnement (6 ; 106; 206) est placée dans ladite enceinte de refroidissement (9 ; 209) de sorte que ledit flux rencontre ladite au moins une paroi latérale (27 ; 127).

3. Procédé selon l'une quelconque des revendications 1 à 2, **caractérisé en ce qu'**il comporte l'étape d'introduire ladite au moins une unité de conditionnement (6 ; 106 ; 206) dans ladite enceinte de refroidissement (9 ; 209).

4. Système de congélation pour la mise en oeuvre du procédé selon l'une quelconque des revendications 1 à 3, comprenant une pluralité de tubes de conditionnement à congeler, chacun desdits tubes de conditionnement étant rempli d'un volume prédéterminé de substance biologique, comportant au moins une unité de conditionnement (6 ; 106 ; 206) pourvue d'une contenance plus grande que ladite pluralité de dits tubes de conditionnement (5) et configurée pour accueillir directement ladite pluralité de dits tubes de conditionnement (5) ; une enceinte de refroidissement (9 ; 209) configurée pour recevoir ladite au moins une unité de conditionnement (6 ; 106 ; 206) et pour être traversée par un flux d'agent de refroidissement ; et une unité d'entraînement en rotation (19 ; 219) configurée pour entraîner en rotation sur elle-même ladite au moins une unité de conditionnement (6 ; 106 ; 206) et mettre en mouvement chaque dit tube de conditionnement (5) par rapport à ladite au moins une unité de conditionnement (6 ; 106 ; 206) et par rapport aux autres dits tubes de conditionnement (5) le système étant **caractérisé par le fait que** la rotation sur elle-même de ladite au moins une unité de conditionnement (6 ; 106; 206) brasse lesdits tubes de conditionnement (5); et **par le fait que** ladite au moins une unité de conditionnement (6 ; 106 ; 206) forme un réceptacle en forme de tambour et présente au moins une paroi latérale longitudinale (27 ; 127) et un espace interne (30 ; 130) configurés pour accueillir ladite pluralité de dits tubes de conditionnement (5), de sorte que chaque dit tube de conditionnement (5) s'étend longitudinalement suivant ladite direction longitudinale de ladite au moins une paroi latérale (27, 127).

5. Système selon la revendication 4, **caractérisé en ce que** ladite au moins une unité de conditionnement (6 ; 106 ; 206) est configurée pour être disposée dans ladite enceinte de refroidissement (9 ; 209) de telle sorte que ledit flux d'agent de refroidissement rencontre ladite au moins une paroi latérale (27 ; 127).

6. Système selon l'une quelconque des revendications 4 à 5, **caractérisé en ce que** ladite au moins une unité de conditionnement (6 ; 106 ; 206) présente au moins une paroi latérale longitudinale (27 ; 127) pourvue d'une surface latérale interne (38 ; 138) conformée pour mettre en mouvement chaque dit tube de conditionnement (5) par rapport à ladite paroi latérale longitudinale (27 ; 127) et par rapport aux autres dits tubes de conditionnement (5) lorsque ladite au moins une unité de conditionnement (6 ; 106 ; 206) est en rotation.

7. Système selon la revendication 6, **caractérisé en ce que** ladite au moins une unité de conditionnement (6 ; 106 : 206) présente au moins un relief (40 ; 140) ménagé sur ladite surface latérale interne (27 ; 127), lequel relief est configuré pour mettre en mouvement chaque dit tube de conditionnement (5) par rapport à ladite paroi latérale longitudinale (27 ; 127) et par rapport aux autres dits tubes de conditionnement (5) lorsque ladite au moins une unité de conditionnement (6 ; 106 ; 206) est en rotation.

8. Système selon l'une quelconque des revendications 4 à 7, **caractérisé en ce que** ladite au moins une unité de conditionnement (6 ; 106 ; 206) présente au moins une paroi latérale (27 ; 127) pourvue d'au moins une ouverture (33; 144) à travers laquelle peut passer ledit flux d'agent de refroidissement.

9. Système selon la revendication 8, **caractérisé en ce que** ladite au moins une ouverture présente la forme d'une fenêtre (33) s'étendant suivant ladite direction longitudinale.

10. Système selon l'une des revendications 8 et 9, **caractérisé en ce que** ladite au moins une ouverture est formée par une série de fentes (144) débouchantes et successivement disposées suivant ladite direction longitudinale, chaque fente (144) ayant une direction principale distincte de ladite direction longitudinale.

11. Système selon l'une quelconque des revendications 4 à 10, **caractérisé en ce que** ladite au moins une unité de conditionnement (6 ; 106 ; 206) comporte un couvercle amovible (28 ; 128 ; 228) qui est métallique ; et **en ce que** ladite au moins une unité de conditionnement (6 ; 106 ; 206) est pourvue d'au moins un organe magnétique (41 ; 141) permettant la fixation par aimantation dudit couvercle amovible (28 ; 128 ; 228) sur ladite au moins une unité de conditionnement (6 ; 106 ; 206).

12. Système selon l'une quelconque des revendications 4 à 11, **caractérisé en ce que** ladite enceinte de refroidissement (9) présente une forme parallélépipédique et est divisée en une zone inférieure (11) dans laquelle est disposé un dispositif d'expulsion (16) et une zone supérieure dans laquelle est disposée ladite au moins une unité de conditionnement (6), ledit dispositif d'expulsion (16) étant configuré pour expulser ledit agent de refroidissement de ladite zone inférieure (11) vers ladite au moins une unité de conditionnement (6) dans ladite zone supérieure (12).

13. Système selon l'une quelconque des revendications 4 à 12, **caractérisé en ce que** ladite enceinte de refroidissement (209) est formée par une pluralité de zones (251, 252, 250, 254) disposées dans une veine et dont l'une au moins desdites zones est une zone de congélation (252) dans laquelle est introduite ladite au moins une unité de conditionnement (206) et sur laquelle est montée ladite unité d'entraînement en rotation (219).

14. Système selon l'une quelconque des revendications 4 à 13, **caractérisé en ce qu'**il comporte un organe de maintien (265) de ladite au moins une unité de conditionnement (206), lequel organe (265) est pourvu d'au moins un rouleau (266 ; 267) mobile en rotation sur lui-même et sur lequel ladite unité de conditionnement (206) est configurée pour reposer lorsqu'elle est mise en rotation sur elle-même.

15. Système selon la revendication 14, **caractérisé en ce que** ledit organe de maintien (265) comporte deux rouleaux (266 ; 267), est pivotant et admet deux configurations, une configuration de soutien dans laquelle ladite au moins une unité de conditionnement (206) est mise en rotation sur elle-même et repose sur les deux dits rouleaux (266, 267) et une configuration de déchargement dans laquelle ledit organe de maintien (265) est pivoté de sorte que ladite au moins une unité de conditionnement (206) ne repose plus sur les deux dits rouleaux (266, 267) et peut alors être déchargée.

## Patentansprüche

1. Verfahren zum Einfrieren einer Vielzahl von jeweils mit einem vorgegebenen Volumen einer biologischen Substanz gefüllten Verpackungsröhrchen, umfassend den Verfahrensschritt des direkten Einbringens jedes Verpackungsröhrchens (5) in eine Verpackungseinheit (6; 106; 206), welche in einem Kühlgehäuse (9; 209) positioniert wird, gefolgt von einem Durchströmen des Kühlgehäuses (9; 209) durch einen Fluss eines Kühlmittels unter gleichzeitigem in Rotation um sich selbst Versetzen der Verpackungseinheit (6; 106; 206); wobei das Verfahren den Verfahrensschritt der Bereitstellung der Verpackungseinheit (6; 106; 206) mit einem Fassungsvermögen größer als die Vielzahl der Verpackungsröhrchen (5) umfasst; wobei der Verfahrensschritt des direkten Einbringens jedes Verpackungsröhrchens (5) in eine Verpackungseinheit (6; 106; 206) durchgeführt wird, indem die Vielzahl der Verpackungsröhrchen (5) in der Verpackungseinheit (6; 106; 206) positioniert wird; und wobei der Verfahrensschritt des in Rotation Versetzens der Verpackungseinheit (6; 106; 206) um sich selbst durchgeführt wird, dass jedes Verpackungsröhrchen (5) in Bezug auf die Verpackungseinheit (6, 106; 206) und in Bezug auf die anderen Verpackungsröhrchen (5) in Bewegung versetzt wird, wobei das Verfahren **dadurch gekennzeichnet ist, dass** der Verfahrensschritt des in Rotation um sich selbst Versetzens der Verpackungseinheit (6; 106; 206) die Verpackungsröhrchen (5) durchrührt; wobei die Verpackungseinheit (6; 106; 206) ein Behältnis in Form einer Trommel bildet und mindestens eine Längsseitenwandung (27; 127) und einen inneren Raum (30; 130) aufweist; wobei die Vielzahl der Verpackungsröhrchen (5) in dem inneren Raum positioniert wird, so dass jedes Verpackungsröhrchen (5) sich längs entlang der Längsrichtung erstreckt, in welche sich die mindestens eine Längsseitenwandung (27; 127) erstreckt.

2. Verfahren nach Anspruch 1, **dadurch gekennzeichnet, dass** die Verpackungseinheit (6; 106; 206) in dem Kühlgehäuse (9; 209) positioniert wird, so dass der Fluss auf die mindestens eine Seitenwandung (27; 127) auftrifft.

3. Verfahren nach einem der Ansprüche 1 bis 2, **dadurch gekennzeichnet, dass** es den Verfahrensschritt des Einbringens der mindestens eine Verpackungseinheit (6; 106; 206) in das Kühlgehäuse (9; 209) umfasst.

4. System zum Einfrieren zur Durchführung des Verfahrens nach einem der Ansprüche 1 bis 3, umfassend eine Vielzahl einzufrierender Verpackungsröhrchen, wobei jedes Verpackungsröhrchen mit einem vorgegebenen Volumen einer biologischen Substanz gefüllt ist, umfassend mindestens eine Verpackungseinheit (6; 106; 206), welche mit einem größeren Fassungsvermögen als die Vielzahl der Verpackungsröhrchen (5) ausgestattet ist und ausgebildet ist, um die Vielzahl der Verpackungsröhrchen (5) direkt aufzunehmen; ein Kühlgehäuse (9; 209), welches ausgebildet ist, um die mindestens eine Verpackungseinheit (6; 106; 206) aufzunehmen und durch einen Fluss eines Kühlmittels durchströmt zu werden; und eine Einheit zum in Rotation Versetzen (19; 219), welche ausgebildet ist, um die mindestens eine Verpackungseinheit (6; 106; 206) um sich selbst in Rotation zu versetzen und jedes Verpackungsröhrchen (5) in Bezug auf die mindestens eine Verpackungseinheit (6, 106; 206) und in Bezug auf die anderen Verpackungsröhrchen (5) in Bewegung zu versetzen, wobei das System **dadurch gekennzeichnet ist, dass** die Rotation der mindestens einen Verpackungseinheit (6; 106; 206) um sich selbst die Verpackungsröhrchen (5) durchrührt und dass die mindestens eine Verpackungseinheit (6; 106; 206) ein Behältnis in Form einer Trommel bildet und mindestens eine Längsseitenwandung (27; 127) und einen inneren Raum (30; 130) aufweist, welche ausgebildet sind, um die Vielzahl der Verpackungsröhrchen (5) aufzunehmen, so dass jedes Verpackungsröhrchen (5) sich längs entlang der Längsrichtung der mindestens einen Seitenwandung (27; 127) erstreckt.

5. System nach Anspruch 4, **dadurch gekennzeichnet, dass** mindestens eine Verpackungseinheit (6; 106; 206) ausgebildet ist, um in das Kühlgehäuse (9; 209) eingebracht zu werden, so dass der Fluss des Kühlmittels auf die mindestens eine Seitenwandung (27; 127) auftrifft.

6. System nach einem der Ansprüche 4 bis 5, **dadurch gekennzeichnet, dass** mindestens eine Verpackungseinheit (6; 106; 206) mindestens eine Längsseitenwandung (27; 127) aufweist, welche mit einer inneren Längsoberfläche (38; 138) versehen ist, welche ausgelegt ist, um jedes Verpackungsröhrchen (5) in Bezug auf die Längsseitenwandung (27; 127) und in Bezug auf die anderen Verpackungsröhrchen (5) in Bewegung zu versetzen, wenn die mindestens eine Verpackungseinheit (6; 106; 206) in Rotation befindlich ist.

7. System nach Anspruch 6, **dadurch gekennzeichnet, dass** die mindestens eine Verpackungseinheit (6; 106; 206) mindestens ein Relief (14; 114) aufweist, welches über die innere Seitenoberfläche (27; 127) geführt ist, wobei das Relief ausgelegt ist, um jedes Verpackungsröhrchen (5) in Bezug auf die Längsseitenwandung (27; 127) und in Bezug auf die anderen Verpackungsröhrchen (5) in Bewegung zu versetzen, wenn die mindestens eine Verpackungseinheit (6; 106; 206) in Rotation befindlich ist.

8. System nach einem der Ansprüche 4 bis 7, **dadurch gekennzeichnet, dass** die mindestens eine Verpackungseinheit (6; 106; 206) mindestens eine Seitenwandung (27; 127) aufweist, welche mit mindestens einer Öffnung (33; 144) versehen ist, durch welche der Fluss des Kühlmittels passieren kann.

9. System nach Anspruch 8, **dadurch gekennzeichnet, dass** die mindestens eine Öffnung die Form eines sich entlang der Längsrichtung erstreckenden Fensters (33) aufweist.

10. System nach einem der Ansprüche 8 und 9, **dadurch gekennzeichnet, dass** die mindestens eine Öffnung durch eine Serie von einmündenden Schlitzen (144) gebildet wird, welche aufeinanderfolgend entlang der Längsrichtung angeordnet sind, wobei jeder Schlitz (144) eine von der Längsrichtung verschiedene Hauptrichtung aufweist.

11. System nach einem der Ansprüche 4 bis 10, **dadurch gekennzeichnet, dass** die mindestens eine Verpackungseinheit (6; 106; 206) einen abnehmbaren Deckel (28; 128; 228) aufweist, welcher metallisch ist; und dass die mindestens eine Verpackungseinheit (6; 106; 206) mit mindestens einem magnetischen Organ (41; 141) versehen ist, welches eine Fixierung mittels Magnetisierung des abnehmbaren Deckels (28; 128; 228) auf der mindestens eine Verpackungseinheit (6; 106; 206) ermöglicht.

12. System nach einem der Ansprüche 4 bis 11, **dadurch gekennzeichnet, dass** das Kühlgehäuse (9) die Form eines Parallelepipeds aufweist und unterteilt ist in eine untere Zone (11), in welcher eine Austreibvorrichtung (16) angeordnet ist, und in eine obere Zone , in welcher die mindestens eine Verpackungseinheit (6) angeordnet ist, wobei die Austreibvorrichtung (16) ausgebildet ist, um das Kühlmittel aus der inneren Zone (11) in Richtung der mindestens einen Verpackungseinheit (6) in der oben Zone (12) auszutreiben.

13. System nach einem der Ansprüche 4 bis 12, **dadurch gekennzeichnet, dass** das Kühlgehäuse (209) durch eine Vielzahl von Zonen (251, 252, 250, 254) gebildet ist, welche in einer Ader angeordnet sind und von denen mindestens eine der Zonen eine Einfrierzone (252) ist, in welche die mindestens eine Verpackungseinheit (206) eingebracht wird und auf welcher die Einheit zum in Rotation Versetzen (219) angeordnet ist.

14. System nach einem der Ansprüche 4 bis 13, **dadurch gekennzeichnet, dass** es ein Halteorgan (265) für die mindestens eine Verpackungseinheit (206) umfasst, wobei das Organ (265) mit mindestens einer in Rotation um sich selbst beweglichen Rolle (266; 267) versehen ist, wobei hierauf die Verpackungseinheit (206) ausgelegt ist zu Ruhen, wenn sie in Rotation um sich selbst versetzt wird.

15. System nach Anspruch 14, **dadurch gekennzeichnet, dass** das Halteorgan (265) zwei Rollen (266; 267) umfasst, drehbar ist und zwei Konfigurationen ermöglicht, eine Stützkonfiguration, in welcher die mindestens eine Verpackungseinheit (206) in Rotation um sich selbst versetzt wird und auf den zwei Rollen (266, 267) ruht, und eine Entladekonfiguration, in der das Halteorgan (265) drehbar ist, so dass die mindestens eine Verpackungseinheit (206) nicht mehr auf den zwei Rollen (266, 267) ruht und dann entladen werden kann.

## Claims

1. Method for freezing a plurality of conditioning tubes each filled with a predetermined volume of biological substance, comprising the step of arranging each said conditioning tube (5) directly into a conditioning unit (6; 106; 206) placed in a cooling enclosure (9; 209) then causing said cooling enclosure (9; 209) to be passed through by a flow of cooling agent and simultaneously driving said conditioning unit (6; 106; 206) in rotation on itself; the method comprising the step of providing said conditioning unit (6; 106; 206) with a greater capacity than said plurality of conditioning tubes (5); in that the step of arranging each said conditioning tube (5) directly into a conditioning unit (6; 106; 206) is carried out by placing said plurality of conditioning tubes (5) into said conditioning unit (6; 106; 206); and in that said step of driving said conditioning unit (6; 106; 206) in rotation on itself is implemented by setting each said conditioning tube (5) in motion with respect to said conditioning unit (6; 106; 206) and with respect to the other said conditioning tubes (5); the method being **characterized in that** said step of driving said conditioning unit (6; 106; 206) in rotation on itself stir said conditioning tubes (5);
said conditioning unit (6; 106; 206) forms a receptacle having a shape of a drum and has at least one longitudinal side wall (27; 127) and an internal space (30; 130); and said plurality of said conditioning tubes (5) is placed in said internal space so that each said conditioning tube (5) extends longitudinally in the longitudinal direction in which said at least one side wall (27; 127) extends.

2. Method according to claim 1, **characterized in that** said conditioning unit (6; 106; 206) is placed in said cooling enclosure (9; 209) so that said flow meets at least one side wall (27; 127).

3. Method according to any one of claims 1 to 2, **characterized in that** it comprises the step of introducing said at least one conditioning unit (6; 106; 206) into said cooling enclosure (9; 209).

4. System for freezing for the implementation of the method according to any one of claims 1 to 3, comprising a plurality of conditioning tubes to freeze, each of said conditioning tubes being filled with a predetermined volume of biological substance, , comprising at least one conditioning unit (6; 106; 206) provided with a greater capacity than said plurality of said conditioning tubes (5) and configured in order to directly receive said plurality of said conditioning tubes (5); a cooling enclosure (9; 209) configured in order to receive said at least one conditioning unit (6; 106; 206) and in order to be passed through by a flow of cooling agent; and a unit for driving in rotation (19; 219) configured in order to drive said at least one conditioning unit (6; 106; 206) in rotation on itself and set each said conditioning tube (5) in motion with respect to said at least one conditioning unit (6; 106; 206) and with respect to the other said conditioning tubes (5); the system being **characterized in that** said rotation on itself of said at least one conditioning unit (6; 106; 206) stir said conditioning tubes (5)
said at least one conditioning unit (6; 106; 206) forms a receptacle having a shape of a drum and has at least one longitudinal side wall (27; 127) and an internal space (30; 130) configured in order to receive said plurality of said conditioning tubes (5), so that each said conditioning tube (5) extends longitudinally in said longitudinal direction of said at least one side wall (27; 127).

5. System according to claim 4, **characterized in that** said at least one conditioning unit (6; 106; 206) is configured in order to be arranged in said cooling enclosure (9; 209) so that said flow of cooling agent meets said at least one side wall (27; 127).

6. System according to any one of claims 4 to 5, **characterized in that** said at least one conditioning unit (6; 106; 206) has at least one longitudinal side wall (27; 127) provided with an internal side surface (38; 138) shaped in order to set each said conditioning tube (5) in motion with respect to said longitudinal side wall (27; 127) and with respect to the other said conditioning tubes (5) when said at least one conditioning unit (6; 106; 206) is in rotation.

7. System according to claim 6, **characterized in that** said at least one conditioning unit (6; 106: 206) has at least one raised section (40; 140) arranged on said internal side surface (27; 127), which raised section is configured in order to set each said conditioning tube (5) in motion with respect to said longitudinal side wall (27; 127) and with respect to the other said conditioning tubes (5) when said at least one conditioning unit (6; 106; 206) is in rotation.

8. System according to any one of claims 4 to 7, **characterized in that** said at least one conditioning unit (6; 106; 206) has at least one side wall (27; 127) provided with at least one opening (33; 144) through which said flow of cooling agent can pass.

9. System according to claim 12, **characterized in that** said at least one opening is in the form of a window (33) extending in said longitudinal direction.

10. System according to one of claims 8 and 9, **characterized in that** said at least one opening is formed by a series of through slots (144) arranged successively in said longitudinal direction, each slot (144) having a main direction distinct from said longitudinal direction.

11. System according to any one of claims 4 to 10, **characterized in that** said at least one conditioning unit (6; 106; 206) comprises a metallic removable cover (28; 128; 228); and **in that** said at least one conditioning unit (6; 106; 206) is provided with at least one magnetic component (41; 141) allowing said removable cover to be fixed to said at least one conditioning unit (6; 106; 206) by magnetism.

12. System according to any one of claims 4 to 11, **characterized in that** said cooling enclosure (9) has a parallelepipedic shape and is divided into a lower zone (11) in which an expulsion device (16) is arranged and an upper zone in which said at least one conditioning unit (6) is arranged, said expulsion device (16) being configured in order to expel said cooling agent from said lower zone (11) towards said at least one conditioning unit in said upper zone (12).

13. System according to any one of claims 4 to 12, **characterized in that** said cooling enclosure (209) is formed by a plurality of zones (251, 252, 250, 254) arranged in a gas stream, at least one of said zones being a freezing zone (252) into which said at least one conditioning unit (206) is introduced and on which said unit for driving in rotation (219) is mounted.

14. System according to any one of claims 4 to 13, **characterized in that** it comprises a component (265) for holding said at least one conditioning unit (206), which component (265) is provided with at least one roller (266; 267) mobile in rotation on itself and on which said conditioning unit (206) is configured in order to rest when it is set in rotation on itself.

15. System according to claim 14, **characterized in that** said holding component (265) comprises two rollers (266; 267), is pivoting and allows two configurations, a support configuration in which said at least one conditioning unit (206) is set in rotation on itself and rests on the two said rollers (266, 267) and an unloading configuration in which said holding component (265) is pivoted so that said at least one conditioning unit (206) no longer rests on the two said rollers (266, 267) and can then be unloaded.
